(19) Europäisches Patentamt / European Patent Office / Office européen des brevets

(11) **EP 4 234 637 B1**

(12) **EUROPEAN PATENT SPECIFICATION**

(45) Date of publication and mention
of the grant of the patent:
**06.08.2025 Bulletin 2025/32**

(21) Application number: **21900670.7**

(22) Date of filing: **02.12.2021**

(51) International Patent Classification (IPC):
**C09C 1/48** *(2006.01)*     **H01M 4/62** *(2006.01)*
**H01M 4/139** *(2010.01)*     **H01M 4/13** *(2010.01)*
**C09D 17/00** *(2006.01)*     **H01M 10/0525** *(2010.01)*
**H01M 4/02** *(2006.01)*

(52) Cooperative Patent Classification (CPC):
**C09D 17/005; C09C 1/48; H01M 4/13; H01M 4/139;
H01M 4/62; H01M 4/625; H01M 10/0525;**
C01P 2006/12; C01P 2006/19; C01P 2006/22;
H01M 2004/021; Y02E 60/10

(86) International application number:
**PCT/JP2021/044301**

(87) International publication number:
**WO 2022/118920 (09.06.2022 Gazette 2022/23)**

(54) **CARBON BLACK, SLURRY, AND LITHIUM-ION SECONDARY BATTERY**

RUSS, SCHLAMM UND LITHIUM-IONEN-SEKUNDÄRBATTERIE

NOIR DE CARBONE, BOUILLIE, ET BATTERIE SECONDAIRE AU LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2020 JP 2020202026**

(43) Date of publication of application:
**30.08.2023 Bulletin 2023/35**

(73) Proprietor: **Denka Company Limited
Tokyo 103-8338 (JP)**

(72) Inventors:
• **HARADA, Yusaku
Tokyo 103-8338 (JP)**

• **KOGA, Yuji
Tokyo 103-8338 (JP)**

(74) Representative: **Hoffmann Eitle
Patent- und Rechtsanwälte PartmbB
Arabellastraße 30
81925 München (DE)**

(56) References cited:
EP-A1- 2 351 798      EP-A1- 3 506 402
EP-B1- 3 298 082      WO-A1-2010/035871
WO-A1-2014/185452      WO-A1-2018/037910
JP-A- 2006 213 767      JP-A- 2006 213 767
JP-A- 2007 204 531      JP-A- 2014 214 290
JP-A- 2014 221 889      JP-A- 2018 522 977
JP-A- H09 241 527

**Description**

**Technical Field**

The present invention relates to carbon black, a slurry and a lithium ion secondary battery.

**Background Art**

Lithium ion secondary batteries are widely used as power sources for small electronic devices such as smartphones and tablet computers. Lithium ion secondary batteries are generally composed of electrodes, separators, and electrolytic solutions. An electrode is produced by applying a mixture slurry in which an active material, a conductive agent, a binder and the like are dispersed in a dispersion medium onto a metal plate for a current collector and drying it to form a mixture layer.

As the conductive agent, for example, carbon black is used (for example, Patent Literature 1-4).

**Citation List**

**Patent Literature**

[Patent Literature 1] Japanese Unexamined Patent Publication No. 2014-193986
[Patent Literature 2] European Patent EP 3 298 082 B1
[Patent Literature 3] Japanese Unexamined Patent Publication No. 2006-213767A
[Patent Literature 4] European Unexamined Patent Publication EP 3 506 402 A1

**Summary of Invention**

**Technical Problem**

A role of the conductive agent is to form a conductive path within the electrode. Therefore, if particles aggregate in the electrode, parts having poor conductivity appear locally, the active material is not effectively used, and the discharging capacity decreases, which results in deterioration of battery characteristics.

In recent years, there has been a demand for increasing the capacity of lithium ion secondary batteries, and there has been a tendency to increase a proportion of the active material added into the mixture layer and decrease a proportion of the conductive agent and the binder added. If the proportion of the conductive agent added decreases, it becomes difficult to form a conductive path in the electrode, and battery characteristics deteriorate. Therefore, a study to improve conductivity by increasing the number of particles per unit mass using a conductive agent having a small particle size, reducing the distance between the conductive agent particles in the electrode, and increasing the number of contact points between the active material and the current collector has been performed. However, if the specific surface area increases as the particle size of the conductive agent decreases, since the viscosity of the mixture slurry increases significantly, uniform dispersion becomes difficult.

In addition, when carbon black is used as the conductive agent, the structure of carbon black affects the conductivity and slurry viscosity. Here, the structure of carbon black is a structure in which primary particles are connected. The structure of carbon black develops in a complex entangled shape as the particle size of primary particles decreases. If the structure is developed, it is possible to efficiently form a conductive path in the electrode, but if the dispersion state is poor, the effect cannot be sufficiently exhibited.

In order to achieve high dispersion of the conductive agent and reduce the viscosity of the mixture slurry, studies on performing dispersion by applying strong collision energy with a device such as a high pressure jet mill and extending a dispersion treatment time has been performed, but problems such as contamination with impurities due to wear of the device have been faced. In addition, addition of a dispersing agent has also been studied, but there have been problems that, if the amount of the dispersing agent added increases as the particle size of the conductive agent decreases, battery characteristics deteriorate.

Here, an object of the present invention is to provide a novel carbon black which has a large specific surface area and allows a low-viscosity slurry to be formed. In addition, an object of the present invention is to provide a slurry containing the carbon black and a lithium ion secondary battery containing the carbon black.

**Solution to Problem**

The inventors conducted extensive studies in order to address the above problems, and as a result, in carbon black having a large specific surface area, the ratio of the crystallite size to the specific surface area greatly affects the slurry viscosity.

Specifically, the present invention for addressing the above problems is exemplified below.

(1) Carbon black having a specific surface area of 150 $m^2$/g or more and 400 $m^2$/g or less, and a ratio (Lc/SSA) of a crystallite size (Lc (Å)) to a specific surface area (SSA($m^2$/g)) of 0.06 or more and 0.10 or less, a DBP absorption of 200 mL/100 g or more and 350 mL/100 g or less, and an average primary particle size of less than 25nm.
(2) The carbon black according to (1), wherein the ash content is 0.02 mass% or less.
(3) The carbon black according to (1) or (2), wherein the iron content is less than 2,000 ppb by mass,
(4) A slurry including the carbon black according to any one of (1) to (3) and a dispersion medium.
(5) The slurry according to (4), wherein the viscosity at a shear rate of 10 $s^{-1}$ at 25°C is 200 mPa·s or more and 1,200 mPa·s or less.
(6) A lithium ion secondary battery, including a positive electrode, a negative electrode and a separator, wherein at least one of the positive electrode and the negative electrode contains the carbon black according to any one of (1) to (3).

**Advantageous Effects of Invention**

According to the present invention, it is possible to provide a novel carbon black which has a large specific surface area and allows a low-viscosity slurry to be formed. In addition, according to the present invention, it is possible to provide a slurry containing the carbon black and a lithium ion secondary battery containing the carbon black.

**Description of Embodiments**

Hereinafter, preferable embodiments of the present invention will be described in detail. Here, the present invention is not limited to the embodiments to be described below. Here, in this specification, unless otherwise specified, when a numerical range is indicated using "to," this means a range of the left value "or more" and the right value "or less." For example, "A to B" means A or more and B or less.

<Carbon black>

Carbon black of the present embodiment has a specific surface area of 150 $m^2$/g or more and 400 $m^2$/g or less. This specific surface area is larger than a specific surface area of the carbon black which has been conventionally used as a conductive agent in a lithium ion secondary battery. Carbon black having such a large specific surface area is effective as a conductive agent because it has a strong conductivity-imparting ability due to a percolation effect in a matrix.

Here, the specific surface area is measured according to Method A distribution method (thermal conductivity measurement method) in JIS K 6217-2:2017.

If the specific surface area of carbon black is less than 150 $m^2$/g, the number of contact points with the active material in the mixture layer is reduced and sufficient conductivity may not be exhibited. In order to further improve the conductivity-imparting ability, the specific surface area of carbon black is preferably 160 $m^2$/g or more, more preferably 180 $m^2$/g or more, and still more preferably 200 $m^2$/g or more. That is, the specific surface area of carbon black may be, for example, 150 to 400 $m^2$/g, 160 to 400 $m^2$/g, 180 to 400 $m^2$/g or 200 to 400 $m^2$/g. In addition, if the specific surface area of carbon black exceeds 400 $m^2$/g, it becomes very difficult to disperse it in the slurry, and parts with poor conductivity are generated locally in the electrode, which may deteriorate battery characteristics. The specific surface area of carbon black can be increased by reducing the particle size of primary particles, making them hollow, and making the surface of particles porous.

In the carbon black of the present embodiment, the ratio (Lc/SSA) of the crystallite size (Lc (Å)) to the specific surface area (SSA ($m^2$/g)) is 0.06 or more and 0.10 or less. Carbon black is composed of aggregates of crystallites in which carbon hexagonal network structures overlap in a plurality of layers, and for example, when a high-temperature treatment or the like is performed, the size of crystallites increases due to crystallite rearrangement, and high crystallization progresses. The crystallite size (Lc) can be determined through X-ray diffraction. Specifically, X-ray diffraction is performed using CuK$\alpha$ rays under conditions of a measurement range of $2\theta$=10 to 40° and a slit width of 0.5°. The crystallite size (Lc) can be determined using the obtained diffraction line of the (002) plane according to the Scherrer equation: Lc (Å)=(K$\times\lambda$)/($\beta\times$cos$\theta$). Here, K is a form factor constant of 0.9, $\lambda$ is an X-ray wavelength of 1.54 Å, $\theta$ is an angle indicating the maximum value in the (002) diffraction line absorption band, and $\beta$ is the half width (in radians) in the (002) diffraction line absorption band.

The inventors conducted extensive studies in order to address the above problems, and as a result, in carbon black having a large specific surface area, the ratio (Lc/SSA) greatly affects the slurry viscosity. That is, when the carbon black of the present embodiment has a ratio (Lc/SSA) of 0.06 or more and 0.10 or less, a sufficiently low slurry viscosity can be achieved with a large specific surface area.

Crystallite sizes of carbon black greatly differ due to a difference in thermal history during synthesis (for example, thermal history due to a thermal decomposition and combustion reaction of a fuel oil, a thermal decomposition and combustion reaction of a raw material, and rapid cooling and reaction termination with a cooling medium). In addition, the crystallite size also varies depending on the primary particle size of carbon black to be formed.

According to the findings by the inventors, when comparing carbon black having the same specific surface area, the smaller the ratio (Lc/SSA), the lower the slurry viscosity. The reason for this is not necessarily clear, but when the ratio (Lc/SSA) is low, the number of crystallites constituting primary particles increases, the number of edge parts of crystallites increases, the affinity and wettability with the dispersion medium are improved due to the presence of the edge parts, and the slurry viscosity decreases. In addition, it is thought that, if the crystallite size is smaller, the number of irregularities on the surface of primary particles formed decreases, the flow resistance in the dispersion medium is reduced, and thus the slurry viscosity is lowered.

In the present embodiment, if the ratio (Lc/SSA) is 0.06 or more and 0.10 or less, even with carbon black with a small particle size, a large specific surface area and a developed structure, it is possible to reduce uneven coating on the current collector and uneven distribution of materials in the electrode due to an increased viscosity of the mixture slurry. In addition, when the dispersion state and contact state of the active material and the conductive agent in the electrode are improved, a high capacity of the lithium ion secondary battery can be achieved while minimizing a local decrease in conductivity and a decrease in the discharging capacity of the battery.

In the carbon black of the present embodiment, the ratio (Lc/SSA) is 0.06 or more and 0.10 or less, and in order to obtain the above effect more significantly, the ratio (Lc/SSA) is less, and may be 0.09 or less.

The lower limit of the ratio (Lc/SSA) is limited, because if the crystallinity is too low, the conductivity of the carbon black itself is lowered, and thus the ratio (Lc/SSA) is 0.06 or more. That is, the ratio (Lc/SSA) is 0.06 to 0.10, or may be 0.06 to 0.09.

The DBP absorption of the carbon black of the present embodiment is 200 mL/100 g or more. In addition, the DBP absorption of the carbon black of the present embodiment is 350 mL/100 g or less. That is, the DBP absorption of the carbon black of the present embodiment is 200 to 350 mL/100 g.

The DBP absorption is an index for evaluating the ability to absorb dibutylphthalate (DBP) in voids formed by the carbon black particle surface and structure. In this specification, the DBP absorption is a value obtained by converting the value measured by the method described in JIS K 6221 Method B into a value equivalent to JIS K 6217-4:2008 using the following Formula (a).

$$\text{DBP absorption} = (A - 10.974)/0.7833 \ \dots (a)$$

[in the formula, A indicates the value of the DBP absorption measured by the method described in JIS K 6221 Method B] In carbon black with a developed structure, since there are many neck parts formed by fusion of primary particles and voids formed between particles, the DBP absorption increases. If the DBP absorption is too small, since the structure may not be sufficiently developed, the conductivity-imparting ability within the electrode may be low, and it is not possible to buffer the change in volume of the active material due to charging and discharging of the lithium ion secondary battery, and battery characteristics such as cycle characteristics may deteriorate. If the DBP absorption is too large, the binder in the mixture layer is trapped in the structure of carbon black, the adhesion to the active material and the current collector decreases, and battery characteristics may deteriorate.

The average primary particle size of the carbon black of the present embodiment is less than 25 nm. According to the findings by the inventors, in the carbon black that has the above ratio (Lc/SSA), when comparing two types having the same specific surface area and different average primary particle sizes, carbon black particles with a smaller particle size have a lower slurry viscosity. This is thought to be because carbon black particles with a larger particle size have a larger specific surface area due to the surface becoming porous, and on the other hand, since carbon black particles with a smaller particle size can achieve a large specific surface area even if the surface is relatively smooth, the area of the surface in contact with the dispersion medium increases, and the above effect due to the crystallinity represented by the ratio (Lc/SSA) is exhibited more significantly.

Conventionally, if carbon black particles used as the conductive agent in the lithium ion secondary battery have a small average primary particle size (for example, less than 30 nm), it is difficult to form them into a slurry, but since the carbon black of the present embodiment has the above ratio (Lc/SSA), it can be formed into a slurry even if the average primary particle size is small (for example, less than 30 nm). When carbon black particles with a small particle size can be used in this manner, high conductivity can be exhibited even if the proportion of carbon black added into the mixture layer is low. The average primary particle size of carbon black particles may be, for example, 1 nm or more, 5 nm or more, or 10 nm or more. That is, the average primary particle size of carbon black particles may be, for example, 1 nm or more and less than 25 nm, 5 nm or more and less than 25 nm, or 10 nm or more and less than 25 nm.

The average primary particle size of carbon black particles can be determined by measuring the primary particle sizes of 100 or more randomly selected carbon black particles from an image enlarged at a magnification of 50,000 under a transmission electron microscope (TEM) and calculating the average value thereof. The primary carbon black particles have a small aspect ratio and a shape close to a true sphere, but the shape is not a perfect true sphere. Therefore, in the present embodiment, the largest size of line segments connecting two points on the outer periphery of primary particles in the TEM image is used as the primary particle size of carbon black particles.

The ash content of the carbon black of the present embodiment may be, for example, 0.05 mass% or less, and is preferably 0.03 mass% or less, and more preferably 0.02 mass% or less. The ash content can be measured according to JIS K 1469:2003, and can be reduced, for example, by classifying carbon black with a device such as a dry cyclone.

The iron content of the carbon black of the present embodiment may be, for example, less than 2,500 ppb by mass, and is preferably less than 2,300 ppb by mass, and more preferably less than 2,000 ppb by mass. The iron content can be reduced by, for example, bringing carbon black into contact with a magnet.

The iron content of carbon black can be measured through high frequency inductively coupled plasma mass spectrometry after a pretreatment in the acid decomposition method according to JIS K 0116:2014. Specifically, the iron content can be measured by the following method. First, 1 g of carbon black is accurately weighed out into a quartz beaker and heated in an atmospheric atmosphere in an electric furnace at 800°C×3 hr. Then, 10 mL of a mixed acid (70 mass% of hydrochloric acid and 30 mass% of nitric acid) and 10 mL or more of ultrapure water are added to the residue, and the sample is dissolved by heating on a hot plate at 200°C×1 hr. After cooling, the solution diluted and adjusted to 25 mL with ultrapure water is measured with a highfrequency inductively coupled plasma mass spectrometer (Agilent 8800 commercially available from Agilent).

If the ash content and the iron content of the carbon black of the present embodiment are low, it is possible to more significantly minimize contamination with foreign matter such as metals and ceramics due to damage to a device and the like in a kneading treatment. In addition, it is possible to minimize a decrease in conductivity in the electrode due to contamination with the ash content, insulating foreign matter and the like. Therefore, the carbon black of the present embodiment having a low ash content and iron content can be suitably used for lithium ion secondary batteries for which high safety is required.

A method of producing carbon black of the present embodiment is not particularly limited, and for example, raw materials such as hydrocarbons are supplied from a nozzle installed in the upstream part of the reaction furnace, and carbon black can be produced according to a thermal decomposition reaction and/or combustion reaction and collected from a bag filter directly connected to the downstream part of the reaction furnace.

The raw materials to be used are not particularly limited, and gaseous hydrocarbons such as acetylene, methane, ethane, propane, ethylene, propylene, and butadiene and oily hydrocarbons such as toluene, benzene, xylene, gasoline, kerosene, light oil, and heavy oil can be used. Among these, it is preferable to use acetylene with few impurities. Since acetylene has a higher degree of thermal decomposition than other raw materials and can increase the temperature in the reaction furnace, carbon black nucleation dominates over particle growth according to an addition reaction, and the primary particle size of carbon black particles can be reduced. In addition, the inventors conducted extensive studies in order to control crystallinity of carbon black and as a result, found that it is effective to use a plurality of raw materials, heat the raw materials and then supply them to the reaction furnace. It is thought that, in the conventional production method, carbon black generated via the high temperature part of the reaction furnace and carbon black generated via the low temperature part are mixed, and there is a large variation in characteristics, but when the plurality of raw materials are used, the temperature in the reaction furnace becomes uniform, and the reaction history of thermal decomposition and combustion that the sample has undergone also becomes uniform, and thus the crystallite size and specific surface area of carbon black become uniform, and it is easy to adjust the ratio (Lc/SSA). In addition, it is thought that, when raw materials are heated, mixing of the plurality of raw materials is promoted, and a more uniform temperature field is formed. It is preferable to mix the plurality of raw materials before they are supplied to the reaction furnace. When an oily hydrocarbon is used, it is preferable to supply it after gasifying it through heating. The heating method is not particularly limited, and for example, a tank or transport pipe can be heated by heat exchange with a heat medium.

In addition, it is preferable to supply oxygen, hydrogen, nitrogen, steam or the like to the reaction furnace separately from the raw materials as a carbon source. Since gases other than these raw materials promote gas stirring in the reaction furnace, and the frequency of collision and fusion between primary particles of carbon black generated from the raw materials increases, when a gas other than the raw materials is used, the structure of carbon black is developed, and the DBP absorption tends to increase. As a gas other than the raw materials, it is preferable to use oxygen. When oxygen is used, some of the raw materials are combusted, the temperature in the reaction furnace increases, and it becomes easier to obtain carbon black with a small particle size and a large specific surface area. As a gas other than the raw materials, it is possible to use a plurality of gases. A gas other than the raw materials is preferably supplied to the upstream part of the reaction furnace, and preferably supplied from a nozzle separate from that of the raw materials. Accordingly, similarly, the raw materials supplied from the upstream part are efficiently stirred and the structure is easily developed.

In conventional carbon black production, a cooling medium such as water may be introduced from the downstream part of the reaction furnace in order to terminate a thermal decomposition and combustion reaction of the raw materials, but since the structure developing effect was not observed, and on the other hand, since there is a risk of ratio (Lc/SSA) varying greatly due to rapid temperature change, it is preferable that no cooling medium be introduced from the downstream part of the reaction furnace in the present embodiment.

<Slurry>

The slurry of the present embodiment contains the carbon black of the present embodiment and a dispersion medium.

If the viscosity of the slurry is too high, since strong shearing is applied during kneading with the active material, the structure of carbon black may break, the conductivity may decrease, and contamination with foreign matter may occur due to wear of the device. On the other hand, if the viscosity of the slurry is too low, carbon black tends to precipitate in the slurry, and it may be difficult to maintain uniformity. In the present embodiment, since the slurry viscosity can be lowered due to use of the above carbon black, breakage of the structure of carbon black can be significantly minimized, an excellent conductivity-imparting ability can be maintained, and contamination with foreign matter due to wear of the device can be significantly minimized. That is, in the present embodiment, the proportion of the active material added to the mixture layer can be increased without impairing viscosity characteristics and conductivity of the slurry, and a high capacity of the lithium ion secondary battery can be achieved.

In order to obtain the above effect more significantly, the viscosity ($25°C$, a shear rate of $10\ s^{-1}$) of the slurry is preferably 100 mPa·s or more, and more preferably 200 mPa·s or more. Thereby, precipitation of carbon black is reduced, and the uniformity of the slurry is improved. In addition, in order to obtain the above effect more significantly, the viscosity ($25°C$, a shear rate of $10\ s^{-1}$) of the slurry is preferably 1,500 mPa·s or less, and more preferably 1,200 mPa·s or less. That is, the viscosity ($25°C$, a shear rate of $10\ s^{-1}$) of the slurry may be, for example, 100 to 1,500 Pa·s, 100 to 1,200 Pa·s, 200 to 1,500 Pa·s, or 200 to 1,200 Pa·s.

The dispersion medium is not particularly limited, and for example, N-methyl-2-pyrrolidone, ethanol, ethyl acetate or the like can be used.

The slurry of the present embodiment may further contain other carbon blacks, graphite, carbon nanotubes, carbon nanofibers and the like as long as the conductivity-imparting ability and dispersibility of the carbon black of the present embodiment are not impaired.

The slurry of the present embodiment may further contain additives such as an active material and a dispersing agent.

In the slurry of the present embodiment, the content of the carbon black of the present embodiment may be, for example, 0.5 mass% or more and is preferably 1 mass% or more. In addition, in the slurry of the present embodiment, the content of the carbon black of the present embodiment may be, for example, 50 mass% or less and is preferably 20 mass% or less. That is, in the slurry of the present embodiment, the content of the carbon black of the present embodiment may be, for example, 0.5 to 50 mass%, 0.5 to 20 mass%, 1 to 50 mass%, or 1 to 20 mass%.

A method of producing a slurry of the present embodiment is not particularly limited, and for example, it is possible to produce a slurry by kneading respective components using a general device such as a mixer, a kneader, a disperser, a mill, an automatic revolution type rotating device or the like.

The slurry of the present embodiment can be suitably used as an electrode-forming slurry for forming an electrode of a lithium ion secondary battery. The electrode-forming slurry may be a positive electrode-forming slurry or a negative electrode-forming slurry.

When the slurry of the present embodiment is an electrode-forming slurry, the slurry of the present embodiment may contain an active material, a conductive agent and a dispersion medium, and in this case, the slurry contains the carbon black of the present embodiment as a conductive agent.

The content of the conductive agent in the electrode-forming slurry may be, for example, 0.01 mass% or more, and is preferably 0.05 mass% or more, and more preferably 0.08 mass% or more. In addition, the content of the conductive agent in the electrode-forming slurry may be, for example, 20 mass% or less, and is preferably 15 mass% or less and more preferably 10 mass% or less. That is, the content of the conductive agent in the electrode-forming slurry may be, for example, 0.01 to 20 mass%, 0.01 to 15 mass%, 0.01 to 10 mass%, 0.05 to 20 mass%, 0.05 to 15 mass%, 0.05 to 10 mass%, 0.08 to 20 mass%, 0.08 to 15 mass%, or 0.08 to 10 mass%.

The electrode-forming slurry may further contain a conductive agent other than carbon black. Examples of conductive agents other than carbon black include graphite, carbon nanotubes, and carbon nanofibers.

In the electrode-forming slurry, the proportion of carbon black in the conductive agent may be, for example, 50 mass% or more, and is preferably 70 mass% or more, more preferably 90 mass% or more, and may be 100 mass%.

The active material is not particularly limited, and known active materials used in lithium ion secondary batteries can be used without particular limitation. Examples of positive electrode active materials include lithium cobaltate, lithium nickelate, lithium manganate, nickel/manganese/lithium cobaltate, and lithium iron phosphate. Examples of negative electrode active materials include carbonaceous materials such as natural graphite, artificial graphite, graphite, activated carbon, coke, needle coke, fluid coke, mesophase microbeads, carbon fibers, and pyrolytic carbon.

The electrode-forming slurry may further contain a binder. The binder is not particularly limited, and known binders used in lithium ion secondary batteries can be used without particular limitation. Examples of binders include polyethylene, nitrile rubber, polybutadiene, butyl rubber, polystyrene, styrene/butadiene rubber, polysulfide rubber, nitrocellulose, carboxymethylcellulose, polyvinyl alcohol, polytetrafluoroethylene resins, polyvinylidene fluoride, and polychloroprene fluoride.

A method of forming an electrode using an electrode-forming slurry is not particularly limited, and for example, an electrode-forming slurry is applied onto a current collector and dried, and thus an electrode containing a current collector and a mixture layer can be formed.

The current collector is not particularly limited, and for example, metal foils formed of gold, silver, copper, platinum, aluminum, iron, nickel, chromium, manganese, lead, tungsten, titanium, or alloys mainly composed of these are used. For example, an aluminum foil is preferably used for the positive electrode current collector, and a copper foil is preferably used for the negative electrode current collector.

<Lithium ion secondary battery>

The lithium ion secondary battery of the present embodiment includes a positive electrode, a negative electrode and a separator. In addition, in the lithium ion secondary battery of the present embodiment, at least one of the positive electrode and the negative electrode contains the above carbon black of the present embodiment. In the lithium ion secondary battery of the present embodiment, at least one of the positive electrode and the negative electrode may be formed from the above electrode-forming slurry, and at least one of the positive electrode and the negative electrode may include a mixture layer formed on the current collector from the above electrode-forming slurry.

The lithium ion secondary battery of the present embodiment has a high capacity because the carbon black of the present embodiment is used, and can be produced using the above electrode-forming slurry with favorable productivity.

In the lithium ion secondary battery of the present embodiment, the positive electrode preferably contains the above carbon black of the present embodiment. In addition, in the lithium ion secondary battery of the present embodiment, the positive electrode is preferably formed from the above electrode-forming slurry, and the positive electrode more preferably includes a mixture layer formed on the current collector from the above electrode-forming slurry.

In the lithium ion secondary battery of the present embodiment, the configuration other than the electrode containing the carbon black of the present embodiment may be the same as that of a known lithium ion secondary battery.

The separator is not particularly limited, and separators known as separators for lithium ion secondary batteries can be used without particular limitation. Examples of separators include synthetic resins such as polyethylene and polypropylene. The separator is preferably a porous film because it retains the electrolytic solution well.

The lithium ion secondary battery of the present embodiment may include an electrode group in which positive electrodes and negative electrodes are laminated or wound with separators therebetween.

In the lithium ion secondary battery of the present embodiment, a positive electrode, a negative electrode and a separator may be immersed in the electrolytic solution.

The electrolytic solution is not particularly limited, and may be, for example, a non-aqueous electrolytic solution containing a lithium salt. Examples of non-aqueous solvents in the non-aqueous electrolytic solution containing a lithium salt include ethylene carbonate, propylene carbonate, diethyl carbonate, dimethyl carbonate, and methyl ethyl carbonate. In addition, examples of lithium salts that can be dissolved in the non-aqueous solvent include lithium hexafluorophosphate, lithium borotetrafluoride, and lithium trifluoromethanesulfonate.

In the lithium ion secondary battery of the present embodiment, an ion conducting polymer or the like may be used as an electrolyte.

While preferable embodiments of the present invention have been described above, the present invention is not limited to the above embodiments.

For example, one aspect of the present invention may be an evaluation method of evaluating carbon black having a specific surface area of 150 $m^2$/g or more and 400 $m^2$/g or less. The evaluation method may include a measuring process in which a ratio (Lc/SSA) of the crystallite size (Lc (Å)) to the specific surface area (SSA ($m^2$/g)) is determined and an evaluating process in which carbon black is evaluated using the ratio (Lc/SSA).

The evaluating process may be a selecting process in which carbon black having a ratio (Lc/SSA) of 0.06 or more and 0.10 or less is selected. In this case, the evaluation method can also be called a carbon black selecting process.

[Examples]

Hereinafter, the present invention will be described in more detail with reference to examples, but the present invention is not limited to these examples.

(Example 1)

<Production of carbon black>

Carbon black was produced by supplying acetylene at 12 $Nm^3/h$ and toluene at 32 kg/h, where were raw materials, and oxygen at 20 $Nm^3/h$ as a gas other than the raw materials, from a nozzle installed in the upstream part of the carbon black reaction furnace (with a furnace length of 6 m, a furnace diameter of 0.65 m), and performing collection through a bag filter installed in the downstream part of the reaction furnace. Then, the sample was passed through a dry cyclone device and an iron removal magnet and collected in a tank. Here, acetylene, toluene, and oxygen were heated to 115°C and then supplied to the reaction furnace. The following physical properties of the obtained carbon black were measured. The evaluation results are shown in Table 1.

(1) Specific surface area

The specific surface area was measured according to JIS K 6217-2:2017 Method A distribution method (thermal conductivity measurement method).

(2) crystallite size (Lc): X-ray diffraction was performed using an X-ray diffraction device (commercially available from Brucker"D8ADVANCE") and using CuK$\alpha$ rays under conditions of a measurement range of $2\theta$=10 to 40° and a slit width of 0.5°. The measurement angle was calibrated using X-ray standard silicon (metallic silicon commercially available from Mitsuwa Chemicals Co., Ltd.). Using the obtained diffraction line of the (002) plane, the crystallite size Lc was determined according to the Scherrer equation: Lc ($\text{Å}$)=($K\times\lambda$)/($\beta\times\cos\theta$). Here, K is a form factor constant of 0.9, $\lambda$ is an X-ray wavelength of 1.54$\text{Å}$, $\theta$ is an angle indicating the maximum value in the (002) diffraction line absorption band, and $\beta$ is the half width (in radians) in the (002) diffraction line absorption band.

(3) DBP absorption: obtained by converting a value measured by the method described in JIS K 6221 Method B into a value equivalent to JIS K 6217-4:2008 using Formula (a).

(4) average primary particle size: determined by measuring primary particle sizes of 100 or more randomly selected carbon black particles from an image at a magnification of 50,000 under a transmission electron microscope and calculating the average value thereof.

(5) ash content: measured according to JIS K 1469:2003.

(6) iron content: the iron content was measured through high frequency inductively coupled plasma mass spectrometry after a pretreatment in the acid decomposition method according to JIS K 0116:2014.

<Preparation of slurry>

3 parts by mass of carbon black and 97 parts by mass of N-methyl-2-pyrrolidone (commercially available from Kanto Chemical Co., Inc.) as a dispersion medium were kneaded using a rotation/revolution mixer ("Awatori Rentaro ARV-310" commercially available from Thinky Corporation) at a rotational speed of 2,000 rpm for 30 minutes to produce a carbon black slurry. The viscosity of this slurry at 25°C was evaluated using a viscoelasticity measuring machine (commercially available from AntonPaar "MCR102", $\varphi$30 mm, using a cone plate with an angle of 3°, a gap of 1 mm). Measurement was performed by changing the shear rate from 0.01 $s^{-1}$ to 100 $s^{-1}$, and the viscosity at a shear rate of 10 $s^{-1}$ was obtained. The measurement results are shown in Table 2.

<Production of battery>

40 parts by mass of a carbon black slurry (1.2 parts by mass of carbon black, 38.8 parts by mass of N-methyl-2-pyrrolidone), 96.8 parts by mass of $LiNi_{0.5}Mn_{0.3}Co_{0.2}O_2$ ("TX10" commercially available from Umicore) as a positive electrode active material, 2 parts by mass of polyvinylidene fluoride ("HSV900" commercially available from Arkema) as binder, 0.1 parts by mass of polyvinyl alcohol ("B05" commercially available from Denka Co., Ltd.) as a dispersing agent, and 10 parts by mass of N-methyl-2-pyrrolidone (commercially available from Kanto Chemical Co., Inc.) as a dispersion medium were kneaded using a rotation/revolution mixer ("Awatori Rentaro ARV-310" commercially available from Thinky Corporation) at a rotational speed of 2,000 rpm for 10 minutes to produce a positive electrode-forming mixture slurry. The obtained positive electrode-forming mixture slurry was applied onto an aluminum foil with a thickness of 15 $\mu$m

(commercially available from UACJ) with an applicator, and dried at 105°C for 1 hour in advance. Next, the sample was pressed with a roll press machine at 200 kg/cm, and the sum of the thicknesses of the aluminum foil and the coating film was adjusted to 80 $\mu$m. In order to remove volatile components, vacuum-drying was performed at 170°C for 3 hours to produce a positive electrode.

97 parts by mass of artificial graphite ("MA G-D" commercially available from Hitachi Chemical Company) as a negative electrode active material, 2 parts by mass of styrene butadiene rubber ("BM-400B" commercially available from Zeon Corporation) as a binder, and 1 part by mass of carboxymethyl cellulose ("D2200" commercially available from Daicel Corporation) as a dispersing agent were weighed out, pure water was added thereto, and mixing was performed using a rotation/revolution mixer (Awatori Rentaro ARV-310 commercially available from Thinky Corporation) to produce a negative electrode-forming mixture slurry. The obtained negative electrode-forming mixture slurry was applied onto a copper foil with a thickness of 10 $\mu$m (commercially available from UACJ) with an applicator, and dried at 60°C for 1 hour in advance. Next, the sample was pressed with a roll press machine at 100 kg/cm, and the sum of the thicknesses of the copper foil and the coating film was adjusted to 40 $\mu$m. In order to completely remove water, vacuum-drying was performed at 120°C for 3 hours to produce a negative electrode.

The positive electrode was processed to 40$\times$40 mm, the negative electrode was processed to 44$\times$44 mm, and a polyolefin microporous film as a separator was disposed between both electrodes to produce a battery. An electrolytic solution obtained by dissolving 1 mol/L of lithium hexafluorophosphate (commercially available from Stellachemifa Corporation) in a solution in which ethylene carbonate (commercially available from Aldrich)/dimethyl carbonate (commercially available from Aldrich) were mixed at a volume ratio of 1/1 was used.

As a battery discharge test, the produced battery was charged with a constant current and constant voltage limited to 4.35 V and 0.2C at 25°C and then discharged to 3.0 V at a constant current of 0.2C. Next, the discharge current was changed to 0.2C, 0.5C, 1C, 2C, and 3C, and a discharging capacity for each discharge current was measured. The capacity retention rate during 3C discharge relative to 0.2C discharge was calculated, and evaluated as a discharge rate characteristic. In addition, the produced battery was charged with a constant current and constant voltage limited to 4.35 V and 1C at 25°C and then discharged to 3.0 V at a constant current of 1C. Next, the charging and discharging were repeated 500 cycles, and the discharging capacity was measured. The capacity retention rate during discharge for 500 cycles relative to discharge for 1 cycle was calculated and evaluated as a cycle characteristic. The measurement results are shown in Table 2.

(Examples 2 to 4)

Carbon black was produced and evaluated in the same manner as in Example 1 except that the oxygen supply rate was changed to 21 Nm³/h (Example 2), 22 Nm³/h (Example 3) or 24 Nm³/h (Example 4). The results are shown in Table 1. In addition, using the obtained carbon black, a slurry and a battery were prepared and evaluated in the same manner as in Example 1. The results are shown in Table 2.

(Reference Example 5)

Carbon black was produced and evaluated in the same manner as in Example 1 except that the temperature at which toluene was supplied was changed to 100°C and the oxygen supply rate was changed to 21 Nm³/h. The results are shown in Table 1. In addition, using the obtained carbon black, a slurry and a battery were prepared and evaluated in the same manner as in Example 1. The results are shown in Table 2.

(Reference Example 6)

Carbon black was produced and evaluated in the same manner as in Example 1 except that the temperature at which acetylene was supplied was changed to 85°C, the temperature at which toluene was supplied was changed to 100°C, and the oxygen supply rate was changed to 21 Nm³/h. The results are shown in Table 1. In addition, using the obtained carbon black, a slurry and a battery were prepared and evaluated in the same manner as in Example 1. The results are shown in Table 2.

(Reference Example 7)

Carbon black was produced and evaluated in the same manner as in Example 1 except that the temperature at which acetylene was supplied was changed to 85°C, the temperature at which toluene was supplied was changed to 85°C, and the oxygen supply rate was changed to 21 Nm³/h. The results are shown in Table 1. In addition, using the obtained carbon black, a slurry and a battery were prepared and evaluated in the same manner as in Example 1. The results are shown in Table 2.

(Reference Example 8)

Carbon black was produced and evaluated in the same manner as in Example 1 except that the acetylene supply rate was changed to 11 Nm$^3$/h, the toluene supply rate was changed to 30 kg/h, and the oxygen supply rate was changed to 19 Nm$^3$/h. The results are shown in Table 1. In addition, using the obtained carbon black, a slurry and a battery were prepared and evaluated in the same manner as in Example 1. The results are shown in Table 2.

(Reference Example 9)

Carbon black was produced and evaluated in the same manner as in Example 1 except that the acetylene supply rate was changed to 13 Nm$^3$/h, the toluene supply rate was changed to 35 kg/h, and the oxygen supply rate was changed to 26 Nm$^3$/h. The results are shown in Table 1. In addition, using the obtained carbon black, a slurry and a battery were prepared and evaluated in the same manner as in Example 1. The results are shown in Table 2.

(Reference Example 10)

Carbon black was produced and evaluated in the same manner as in Example 1 except that 12 Nm$^3$/h of ethylene was heated to 115°C and supplied in place of acetylene and the oxygen supply rate was changed to 22 Nm$^3$/h. The results are shown in Table 1. In addition, using the obtained carbon black, a slurry and a battery were prepared and evaluated in the same manner as in Example 1. The results are shown in Table 2.

(Example 11)

Carbon black was produced and evaluated in the same manner as in Example 1 except that 32 kg/h of benzene was heated to 115°C and supplied in place of toluene and the oxygen supply rate was changed to 21 Nm$^3$/h. The results are shown in Table 1. In addition, using the obtained carbon black, a slurry and a battery were prepared and evaluated in the same manner as in Example 1. The results are shown in Table 2.

(Comparative Example 1)

Carbon black was produced and evaluated in the same manner as in Example 1 except that 21 Nm$^3$/h of hydrogen was heated to 115°C and supplied in place of oxygen. The results are shown in Table 1. In addition, using the obtained carbon black, a slurry and a battery were prepared and evaluated in the same manner as in Example 1. The results are shown in Table 2.

(Comparative Example 2)

Carbon black was produced and evaluated in the same manner as in Example 1 except that the acetylene supply rate was changed to 11 Nm$^3$/h, the toluene supply rate was changed to 30 kg/h, and the oxygen supply rate was changed to 24 Nm$^3$/h. The results are shown in Table 1. In addition, using the obtained carbon black, a slurry and a battery were prepared and evaluated in the same manner as in Example 1. The results are shown in Table 2.

(Reference Example 12)

The carbon black obtained in Comparative Example 1 was oxidized in an electric furnace heated to 720°C to obtain carbon black. The obtained carbon black was evaluated in the same manner as in Example 1. The results are shown in Table 1. In addition, using the obtained carbon black, a slurry and a battery were prepared and evaluated in the same manner as in Example 1. The results are shown in Table 2.

(Example 13)

Carbon black was produced and evaluated in the same manner as in Example 1 except that the oxygen supply rate was changed to 21 Nm$^3$/h, and the ash content was adjusted by changing classification conditions in a dry cyclone device. The results are shown in Table 1. In addition, using the obtained carbon black, a slurry and a battery were prepared and evaluated in the same manner as in Example 1. The results are shown in Table 2.

(Example 14)

Carbon black was produced and evaluated in the same manner as in Example 1 except that the oxygen supply rate was changed to 21 Nm$^3$/h and the iron content was adjusted by changing magnetic flux density conditions for the iron removal magnet. The results are shown in Table 1. In addition, using the obtained carbon black, a slurry and a battery were prepared and evaluated in the same manner as in Example 1. The results are shown in Table 2.

(Comparative Example 3)

Carbon black was produced and evaluated in the same manner as in Example 1 except that the acetylene supply rate was changed to 38 Nm$^3$/h and the oxygen supply rate was changed to 10 Nm$^3$/h without supplying toluene. The results are shown in Table 1. In addition, using the obtained carbon black, a slurry and a battery were prepared and evaluated in the same manner as in Example 1. The results are shown in Table 2.

(Comparative Example 4)

Carbon black was produced and evaluated in the same manner as in Example 1 except that the oxygen supply rate was changed to 22 Nm$^3$/h, and the temperature at which acetylene was supplied, the temperature at which toluene was supplied, and the temperature at which oxygen was supplied were all changed to 25°C. The results are shown in Table 1. In addition, using the obtained carbon black, a slurry and a battery were prepared and evaluated in the same manner as in Example 1. The results are shown in Table 2.

[Table 1]

| | Carbon black | | | | | |
|---|---|---|---|---|---|---|
| | Specific surface area (m$^2$/g) | Ratio (Lc/SSA) (Å/(m$^2$/g)) | DBP absorption (mL/100 g) | Average primary particle size (nm) | Ash content (%) | Iron content (ppb by mass) |
| Example 1 | 154 | 0.08 | 221 | 24 | 0.01 | 1390 |
| Example 2 | 178 | 0.08 | 239 | 22 | 0.01 | 1470 |
| Example 3 | 242 | 0.07 | 252 | 20 | 0.01 | 1550 |
| Example 4 | 376 | 0.07 | 318 | 17 | 0.02 | 1870 |
| Reference Example 5 | 180 | 0.12 | 237 | 22 | 0.01 | 1580 |
| Reference Example 6 | 176 | 0.13 | 235 | 22 | 0.01 | 1440 |
| Reference Example 7 | 176 | 0.14 | 238 | 22 | 0.01 | 1500 |
| Reference Example 8 | 158 | 0.07 | 198 | 24 | 0.01 | 1610 |
| Reference Example 9 | 384 | 0.07 | 365 | 17 | 0.02 | 1780 |
| Reference Example 10 | 153 | 0.13 | 204 | 24 | 0.02 | 1700 |
| Example 11 | 213 | 0.08 | 246 | 21 | 0.01 | 1660 |
| Reference Example 12 | 156 | 0.08 | 220 | 27 | 0.01 | 1320 |
| Example 13 | 178 | 0.09 | 240 | 22 | 0.03 | 1440 |
| Example 14 | 179 | 0.09 | 238 | 22 | 0.01 | 2200 |
| Comparative Example 1 | 137 | 0.07 | 226 | 26 | 0.01 | 1240 |
| Comparative Example 2 | 422 | 0.07 | 338 | 16 | 0.02 | 1780 |
| Comparative Example 3 | 181 | 0.16 | 246 | 22 | 0.01 | 1100 |
| Comparative Example 4 | 160 | 0.19 | 210 | 23 | 0.01 | 1450 |

[Table 2]

| | Slurry | Battery characteristics | |
|---|---|---|---|
| | Viscosity (25°C, 10 s$^{-1}$) (mPa·s) | Discharge rate characteristic (%) | Cycle characteristic (%) |
| Example 1 | 340 | 76 | 78 |
| Example 2 | 550 | 83 | 80 |
| Example 3 | 700 | 86 | 85 |
| Example 4 | 960 | 90 | 84 |
| Reference Example 5 | 660 | 80 | 80 |
| Reference Example 6 | 820 | 78 | 79 |
| Reference Example 7 | 1140 | 76 | 79 |
| Reference Example 8 | 350 | 75 | 75 |
| Reference Example 9 | 1020 | 89 | 78 |
| Reference Example 10 | 270 | 75 | 77 |
| Example 11 | 610 | 85 | 83 |
| Reference Example 12 | 450 | 74 | 76 |
| Example 13 | 540 | 82 | 79 |
| Example 14 | 550 | 82 | 80 |
| Comparative Example 1 | 170 | 59 | 70 |
| Comparative Example 2 | 1650 | 66 | 74 |
| Comparative Example 3 | 1800 | 65 | 77 |
| Comparative Example 4 | 1300 | 62 | 71 |

As shown in Table 1, it was confirmed that, when the carbon black of examples was used, an excellent slurry viscosity characteristic and excellent battery characteristics were realized, and a high-performance lithium ion secondary battery was obtained using the carbon black of the present invention with favorable productivity.

**Industrial applicability**

The carbon black of the present invention can be preferably used for the slurry for lithium ion secondary battery electrodes and lithium ion secondary batteries.

**Claims**

1.  Carbon black having a specific surface area of 150 m$^2$/g or more and 400 m$^2$/g or less, and a ratio (Lc/SSA) of a crystallite size (Lc (Å)) to a specific surface area (SSA (m$^2$/g)) of 0.06 or more and 0.10 or less,

    a DBP absorption of 200 mL/100 g or more and 350 mL/100 g or less, and
    an average primary particle size of less than 25nm.

2.  The carbon black according to claim 1,
    wherein the ash content is 0.02 mass% or less.

3.  The carbon black according to claim 1 or 2,
    wherein the iron content is less than 2,000 ppb by mass.

4.  A slurry comprising the carbon black according to any one of claims 1 to 3 and a dispersion medium.

**5.** The slurry according to claim 4,
wherein the viscosity at a shear rate of 10 s$^{-1}$ at 25°C is 200 mPa·s or more and 1,200 mPa·s or less.

**6.** A lithium ion secondary battery, including a positive electrode, a negative electrode and a separator,
wherein at least one of the positive electrode and the negative electrode contains the carbon black according to any one of claims 1 to 3.

**Patentansprüche**

**1.** Ruß mit einer spezifischen Oberfläche von 150 m$^2$/g oder mehr und 400 m$^2$/g oder weniger und einem Verhältnis (Lc/SSA) einer Kristallitgröße (LC(Ä)) zu einer spezifischen Oberfläche (SSA (m$^2$/g)) von 0,06 oder mehr und 0,10 oder weniger,

einer DBP-Absorption von 200 ml/100 g oder mehr und 350 ml/100 g oder weniger und
einer durchschnittlichen Primärpartikelgröße von weniger als 25 nm.

**2.** Ruß gemäß Anspruch 1,
wobei der Aschegehalt 0,02 Masse-% oder weniger beträgt.

**3.** Ruß gemäß Anspruch 1 oder 2,
wobei der Eisengehalt weniger als 2.000 Masse-ppb beträgt.

**4.** Aufschlämmung, umfassend den Ruß gemäß einem der Ansprüche 1 bis 3 und ein Dispersionsmedium.

**5.** Aufschlämmung gemäß Anspruch 4,
wobei die Viskosität bei einer Schergeschwindigkeit von 10 s$^{-1}$ bei 25°C 200 mPa·s oder mehr und 1.200 mPa·s oder weniger beträgt.

**6.** Lithiumionensekundärbatterie, die eine positive Elektrode, eine negative Elektrode und einen Separator einschließt,
wobei mindestens eine von der positiven Elektrode und der negativen Elektrode den Ruß gemäß einem der Ansprüche 1 bis 3 enthält.

**Revendications**

**1.** Noir de carbone ayant une surface spécifique de 150 m$^2$/g ou plus et de 400 m$^2$/g ou moins, et un rapport (Lc/SSA) entre d'une taille des cristallites (Lc (Å)) à une surface spécifique (SSA (m$^2$/g)) de 0,06 ou plus et de 0,10 ou moins,

une absorption de DBP de 200 ml/100 g ou plus et de 350 ml/100 g ou moins, et
une taille moyenne des particules primaires inférieure à 25 nm.

**2.** Le noir de carbone selon la revendication 1, dans lequel la teneur en cendres est inférieure ou égale à 0,02 % en masse.

**3.** Le noir de carbone selon la revendication 1 ou 2, dans lequel la teneur en fer est inférieure à 2000 ppb en masse.

**4.** Une suspension comprenant le noir de carbone selon l'une quelconque des revendications 1 à 3 et un milieu de dispersion.

**5.** La suspension selon la revendication 4, dans laquelle la viscosité à un taux de cisaillement de 10 s-1 à 25 °C est de 200 mPa·s ou plus et de 1200 mPa·s ou moins.

**6.** Batterie secondaire au lithium-ion, comprenant une électrode positive, une électrode négative et un séparateur,
dans laquelle au moins l'une des électrodes positive et négative contient le noir de carbone selon l'une quelconque des revendications 1 à 3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014193986 A
- EP 3298082 B1
- JP 2006213767 A
- EP 3506402 A1